# EUROPEAN PATENT SPECIFICATION

(11) **EP 3 136 610 B1**
(45) Date of publication and mention of the grant of the patent: **06.06.2018**
(21) Application number: 15182803.5
(22) Date of filing: 27.08.2015
(51) Int. Cl.: H04B 1/16, H04W 52/02, G01D 4/00

(54) **ELECTRONIC APPARATUS AND METHOD**
ELEKTRONISCHE VORRICHTUNG UND VERFAHREN
APPAREIL ELECTRONIQUE ET PROCEDE

(43) Date of publication of application: 01.03.2017
(73) Proprietor: Kabushiki Kaisha Toshiba, Tokyo 105-8001 (JP)
(72) Inventor: Tsuji, Tadashi, Tokyo, 105-8001 (JP); Yokota, Ryuhei, Tokyo, 105-8001 (JP)
(74) Representative: Henkel, Breuer & Partner

(56) References cited:
- US-A1- 2001 038 343
- US-A1- 2003 087 615
- US-A1- 2005 024 234
- US-B1- 6 665 620

## Description

Embodiments described herein relate generally to an electronic apparatus having a wireless communication function and a method.

Recently, various electronic apparatuses are provided with a wireless communication function. These electronic apparatuses include electricity meters, gas meters, water meters and the like called smart meters. The smart meter periodically transmits the amount of electricity, gas or water consumed to a server of a power, gas or water company. The server performs an accounting in accordance with the amount consumed and transmits, for example, a charge to the smart meter. The smart meter also transmits power failure information and power recovery information such as an ID number of the smart meter to the server of the power company at the time of power failure and power recovery such that the power company can ascertain the situation of power failure in a service area.

For example, the smart meter is connected to the server as follows: The smart meter is wirelessly connected to a radio base station via a cellular phone network. The radio base station is connected to the Internet. As a result, the server connected to the Internet is connected to the smart meter.

The smart meter controls transmission power for wireless communication depending on, for example, electric field intensity. That is, the smart meter performs the wireless communication by large transmission power in an environment where the electric field intensity is low (weak electric field) and by small transmission power in an environment where the electric field intensity is high. Since power supplied to the smart meter is limited (for example, 6W), however, the operation of the smart meter may be affected if the transmission power for wireless communication becomes too large because of the low electric field intensity, which may cause a sudden system failure and an unintended interruption of the wireless communication. US2003/087615 discloses an arrangement for providing power in a utility meter including a power conversion circuit and a bank of capacitors.

The bank of capacitors are charged by the power supply and is capable of providing a high additional current for a short period, capable of supporting a RF transmitter when sending metering data to an external device. Embodiments described herein aim to handle occurring sudden system down or unintended interruption of wireless communication in an electronic apparatus when transmission power becomes large because of low electric field intensity. The invention is defined by the appended claims. A general architecture that implements the various features of the embodiments will now be described with reference to the drawings. The drawings and the associated descriptions are provided to illustrate the embodiments and not to limit the scope of the invention.
FIG. 1 is a block diagram illustrating an example of the whole network including an electronic apparatus according to an embodiment.
FIG. 2 is a circuit diagram illustrating an exemplary system configuration of the electronic apparatus of the embodiment.
FIG. 3 is a block diagram illustrating an exemplary configuration of a system controller, a 2G/3G device, and a ZigBee (registered trademark) device of the embodiment.
FIG. 4 is a flowchart illustrating an example of the procedure of a communication process executed by the electronic apparatus of the embodiment.
FIG. 5 is a flowchart illustrating an example of the procedure of a power management process executed by the electronic apparatus of the embodiment.

Various embodiments will be described hereinafter with reference to the accompanying drawings.

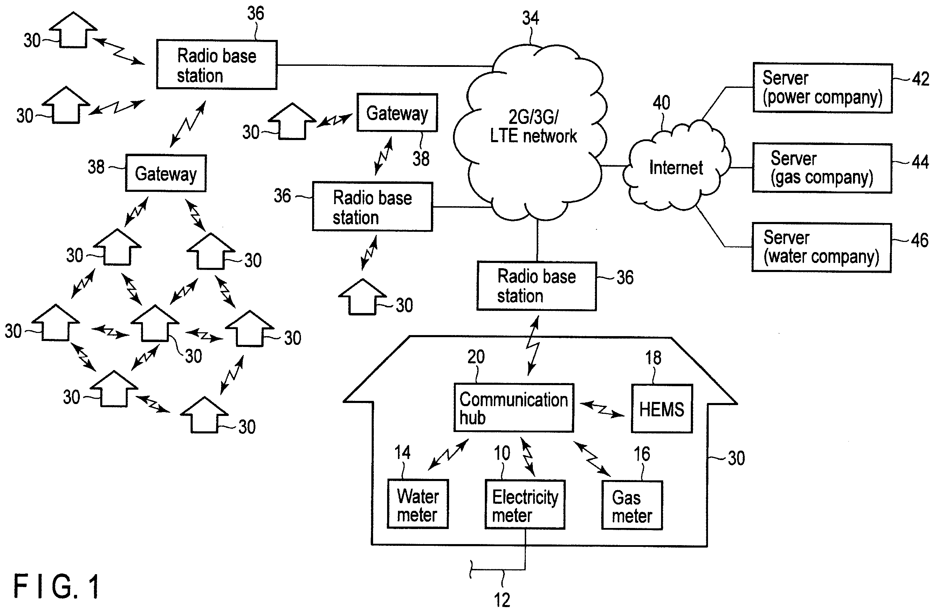

FIG. 1 is a block diagram showing an example of a state where an electronic apparatus of an embodiment is connected to a server via a network such as the Internet. The following description is based on the assumption that the electronic apparatus of the present embodiment is an electricity meter having a wireless communication function, namely, a smart meter, but the electronic apparatus of the present embodiment is not necessarily limited to the above-described meter and may be a meter other than the above-described meter. FIG. 1 further illustrates a gas meter and a water meter and shows an example where all meters use a single common wireless communication function, but it is also possible that each meter has a wireless communication function. FIG. 1 shows an example where a meter unit and a wireless communication unit are realized as separate units and are then combined together before factory-shipped or installed in a house, but it is also possible that the meter unit and the communication unit are realized integrally as a single unit. In the case of being combined together before installed in a house, these units may be combined detachably for convenience in replacing the communication unit when the communication unit is broken or its function needs to be upgraded. Note that data is transmitted or received between these units not only by a wired communication but also by a wireless communication. The meter unit supplies power to the communication unit. The meter unit connected to a commercial power source operates on commercial power. Therefore, the communication unit also operates on commercial power. The smart meter does not operate at the time of a power failure.

An electricity meter 10 as a meter unit is connected to a drop wire 12 which carries commercial power to each house 30. Since the structures of the houses 30 are similar to each other, only a smart meter of one house 30 will be exemplified. The smart meters of the other houses 30 have the same structure. Note that each smart meter includes an arbitrary number of meter units. Depending on houses 30, it is possible to connect only an electricity meter to a communication hub 20 to use it as a smart meter and use the other meters not as smart meters. Meter reading data of the electricity meter 10 is transmitted to the communication hub 20 as a wireless communication unit. Here, although it is possible to transmit the data by a wired communication, the following description is based on the assumption that the data is transmitted by a wireless communication to the communication hub 20 conforming to the ZigBee standard at regular intervals, for example, every half an hour. Although not necessary, it is possible to configure other meters such as a water meter 14 and a gas meter 16 to transmit meter reading data to the communication hub 20 as well. A home gateway 18 of home energy management systems (HEMS) may be connected to the communication hub 20, or the communication hub 20 may function as a home gateway of the HEMS.

The communication hub 20 transmits meter reading data received from the respective meters to servers 42, 44 and 46 of a power company, a water company and a gas company via the Internet 40 regularly, for example, every half an hour. Based on the data, the power company and the like can predict demand and appropriately adjust supply. The communication hub 20 and the Internet 40 are connected by using a mobile phone network 34 such as a mobile network of 2G, 3G, LTE or the like. The mobile phone network 34 is connected to the Internet 40 via a gateway (not shown). The communication 20 is connected to the Internet 40 not only via a mobile phone network but also via a power line communication (PLC) network using a power line as a communication line.

Not only the meter reading data but also other information may be transmitted from the communication hub 20 to the servers 42, 44 and 46. The drop wire 12 carrying commercial power to each house 30 connects to the electricity meter 10 and the electricity meter 10 connects to the communication hub 20, and therefore the communication hub 20 may be configured to detect a power failure and to notify information on the power failure to the server 42. Based on the information, the power company can grasp an area in which a power failure has occurred in a timely manner and start restorations immediately after the power failure. The communication hub 20 is, as will be described later, provided with a large-capacitance capacitor as a standby power supply because the communication hub 20 will lose its power supply if a power failure occurs. The capacitor is charged continuously, and if a power failure occurs, the communication hub 20 transmits information on the power failure by using the charged power.

The server 42 may transmit to the communication hub 20, for example, an acknowledgement of a normal receipt of the meter reading data or the like transmitted from the communication hub 20, a program for upgrading the communication hub 20, and the like.

The communication hub 20 installed in the service area of a radio base station 36 is connected directly to the radio base station 36 via a mobile phone network. The communication hub 20 installed outside of the service area of the radio base station 36 is connected to a gateway 38 provided in the service area of the radio base station 36 via a multi-hop wireless communication network (also called an RF mesh network) conforming to the IEEE 802.15.4 standard. The gateway 38 can be connected to the radio base station 36 via a mobile phone network. In the RF mesh network, data is transmitted in such a manner as to multi-hop one communication hub 20 to another. In the RF mesh network, communication hubs are connected in a mesh-like manner under one communication hub (gateway). The gateway 38 is not necessarily a dedicated device, and the communication hub 20 installed in the service area of the radio base station 36 may operate as the gateway 38. The destination of data of each communication hub constituting the RF mesh network may be determined in advance by measuring the intensity of a received signal when installing the communication hub. Since multiple communication hubs are determined as candidates for the destination of data of each communication hub, it is also possible to determine the destination of data of each communication in such a manner as to minimize the cost by calculating the cost related to the communication quality and the like of each wireless communication path to the gateway.

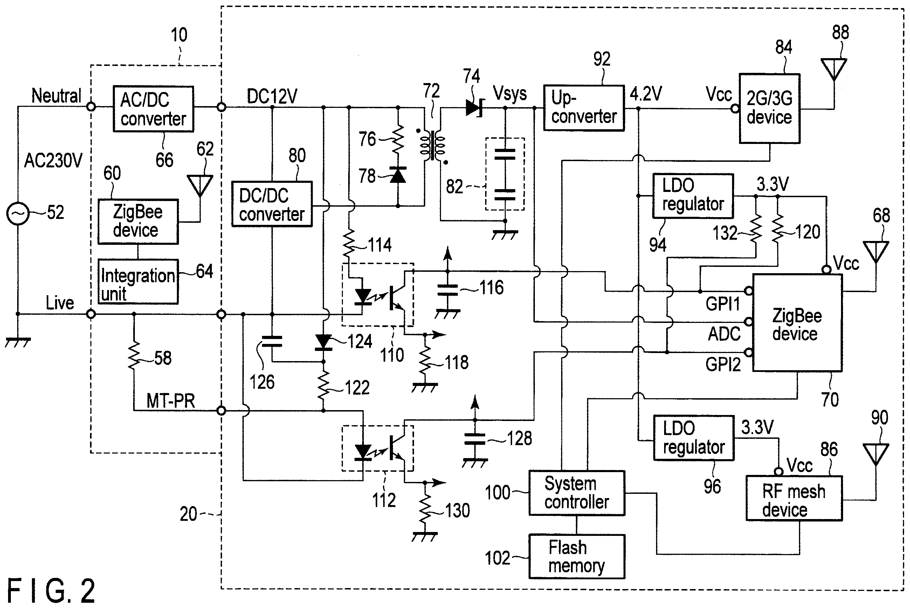

FIG. 2 is a circuit diagram showing an example of the smart meter implemented as the electronic apparatus of the embodiment. Ordinary commercial power (such as an AC 200 V or 100 V in Japan and AC 230 V in the UK) is applied to the electricity meter 10. Power supply lines for a commercial power 52 include, for example, an AC 230 V neutral line and a non-isolated and ground level live line.

The electricity meter 10 includes an AC/DC converter 56, a tamper detection pull-down resistor 58, a wireless communication device conforming to the ZigBee standard (hereinafter referred to as a ZigBee device) 60, an antenna 62, an integration unit 64, and the like. The AC voltage from the neutral line is supplied to the AC/DC converter 66, and then the AC voltage is converted to a DC voltage (for example, DC 12 V) and supplied as a power to the communication hub 20 via a connector. The live line bypasses the electricity meter 10 and is connected directly to the ground line of the communication hub 20. The connector between the electricity meter 10 and the communication hub 20 is provided with a tamper detection terminal MT_PR in addition to a DC 12 V terminal and a live line terminal. The tamper detection terminal MT_PR of the communication hub 20 is connected to the live line via the pull-down resistor 58 (of, for example, 10 Ω) in the electricity meter 10.

House wiring connecting to electric apparatuses (not shown) is connected to the electricity meter 10, and an integration value of power consumed by the electric apparatuses is calculated by the integration unit 64. The integration value of the consumed power is wirelessly transmitted to the communication hub 20 via the ZigBee device 60 and the antenna 62 at regular intervals (for example, every half an hour). However, the above-described structure is in no way restrictive, and it is also possible to transmit the meter reading data of the electricity meter 10 to the communication hub 20 (system controller 100 which will be described later) by a wired communication via a connector.

Since the meters other than the electricity meter 10 such as the gas meter 16 and the water meter 14 also transmits the data of the consumed amount of gas and the data of the consumed amount of water to the communication hub 20 from ZigBee devices provided in the respective meters, the communication hub 20 can receive these data via an antenna 68 and a ZigBee device 70. That is, the communication hub 20 can receive not only the meter reading data of the electricity meter 10 but also the meter reading data of various other meters wirelessly at regular intervals (for example, every half an hour) and transfer the data to servers 42, 44, 46.

The DC voltage of, for example, 12 V supplied from the electricity meter 10 to the communication hub 20 is transformed via a transformer 72 and is output as a Vsys voltage of, for example, 4.2 V via a diode 74. Both ends of a primary coil of the transformer 72 are connected to each other via a resistor 76 and a diode 78. The DC/DC converter 80 is also connected on the primary side of the transformer 72 and is supplied with the DC 12 V. Both ends of a secondary coil of the transformer 72 are connected to each other via a large-capacitance electric-double-layer capacitor (also called an ultracapacitor) 82, and the output voltage Vsys of the transformer 72 is charged in the electric-double-layer capacitor 82. Since the electric-double-layer capacitor 82 includes a cathode and an anode which respectively constitute electric-double-layers, the electric-double-layer capacitor 82 is equivalent to two capacitors connected in series. Each capacitor has, for example, a capacitance of 25 F, and the electric-double-layer capacitor 82 equivalent to two capacitors connected in series has a capacitance of 12.5 F. The electric-double-layer capacitor 82 may be replaced with a battery which accumulates power.

Although the communication hub 20 operates on power supplied from the electricity meter 10 as described above, the upper limit of the power which can be supplied from the electricity meter 10 to the communication hub 20 is fixed (for example, 6 W). There are some cases where a mobile phone, in particular, at the time of 2G transmission instantaneously requires a large amount of power and therefore the power supplied from the electricity meter 10 becomes insufficient. In the 2G transmission, if the intensity of a signal received in the radio base station is weak, the server 42 gives an instruction to the communication hub 20 to increase the transmission output power, and the communication hub 20 accordingly increases the transmission output power. Here, there are some cases where an instantaneous value of the power exceeds the upper limit. As an assist power supply for such cases, the electric-double-layer capacitor 82 is provided. Further, as described above, the electric-double-layer capacitor 82 is provided also as a standby power supply configured, if a power failure occurs, to supply power for transmitting power failure information to the server 42. The capacitance of the electric-double-layer capacitor 82 is set to such a value as to maintain the output voltage Vsys of the transformer 72 for a certain time even after the supply of the DC 12 V to the communication hub 20 is cut so that the communication hub 20 can perform data transmission for some time (for example, 30 minutes) even after a power failure occurs.

The communication hub 20 includes multiple, for example, three wireless communication devices including a wireless communication device conforming to mobile phone standards such as 2G, 3G and LTE (hereinafter referred to as a 2G/3G device) 84, a ZigBee device 70, an RF mesh device (wireless communication device conforming to the IEEE 802.15.4 standard for constituting an RF mesh network) 86 and the like. The ZigBee device 70 is provided for receiving meter reading data from each meter, and the 2G/3G device 84 and the RF mesh device 86 are provided for transmitting the meter reading data of each meter received from the ZigBee device 70 to servers 42, 44, 46 or for receiving data from the servers 42, 44, 46.

To communication devices 70, 84 and 86, antennas 68, 88 and 90 are connected, respectively. Antennas 68, 88 and 90 are attached at the time of manufacturing a product and provided inside the housing (not shown) of the communication hub 20.

As described above, for transmitting meter reading data to and receiving data from servers 42, 44, 46, the 2G/3G device 84 is used in the service area of the radio base station 36, and the RF mesh device 86 is used in the outside of the service area of the radio base station 36. In this way, either the 2G/3G device 84 or the RF mesh-device 86 is used for the wireless communication with the servers 42, 44, 46 based on the electric field intensity in an installation location of the communication hub 20. Here, although the other one of these communication devices seems to become unnecessary, there are some cases where the electric field intensity changes after installation because of construction of a new radio base station, construction of a building which disturbs radio or the like, and therefore the communication hub 20 includes both communication devices and configured, when the communication hub 20 becomes unable to continue a wireless communication by one device, to switch to the other device to continue the wireless communication. Note that it is also possible in an apartment building, an office building and the like to connect the communication hub 20 to the Internet 40 via the PLC network using a power line as a communication line.

The operating voltage of the 2G/3G device 84 is 3.4 to 4.2 V (typically: 3.8 V), and on the other hand, the operating voltages of the ZigBee device 70 and the RF mesh device 86 are 3.3 V (typically). The voltage of the electric-double-layer capacitor 82 decreases from 4.2 V when the DC 12 V is cut because of a power failure or the like, but since the output Vsys of the transformer 72 is stepped up, for example, to a DC 4.2 V via an upconverter 90 and supplied to the supply terminal Vcc of the 2G/3G device 84, the 2G/3G device 84 can operate even at the time of a power failure. The 2G/3G device 84 can transmit meter reading data to, for example, the server 42 of a power company even at the time of a power failure by communicating with the radio base station 36 via antenna 88.

The output Vsys of the transformer 72 is transformed into 3.3 V via a low-dropout (LDO) regulator 94 and supplied to the supply terminal Vcc of the ZigBee device 70. Therefore, the ZigBee device 70 can operate at the time of a power failure as well. The ZigBee device 70 receives meter reading data from each meter by communicating with the meter via antenna 68. The RF mesh device 86 transmits received meter reading data to the gateway 38 by way of (by hopping) RF mesh devices of other communication hubs 20 via the antenna 90. The 2G/3G device 84 transmits meter reading data received from a meter or meter reading data received from other communication hubs to the radio base station 36 via the antenna 88.

The output Vsys of the transformer 72 is transformed into 3.3 V via the LDC regulator 96 and supplied to the supply terminal Vcc of the RF mesh device 86. Therefore, the RF mesh device 86 can operate even at the time of a power failure as well. The RF mesh device 86 forms a wireless mesh network with other communication hubs 20 via the antenna 90, thereby transmitting meter reading data to the gateway 38.

The 2G/3G device 84, the ZigBee device 70, and the RF mesh device 86 are connected to a system controller 100, and the system controller 100 controls the transmission and reception of meter reading data. For example, meter reading data of each meter received by the ZigBee device 70 is transmitted from the 2G/3G device 84 or the RF mesh device 86 to the server 42, 44, 46 at regular intervals under the control of the system controller 100. The system controller 100 connects to a flash memory 102. In the flash memory 102, identification information of the communication hub 20, meter reading data received from other meters, data necessary for performing the control and the like are written.

Since it is possible to detect a power failure by using a change in the power supply voltage supplied from the electricity meter 10, the detection of a power failure can be performed by any one of the communication devices 70, 84 and 86. Here, a case where the detection of a power failure is performed by the ZigBee device 70 will be described as an example. It is also possible to perform the detection in the other devices by applying similar modifications thereto. The ZigBee device 70 includes a GPI1 terminal, a GPI2 terminal and an ADC terminal for power failure detection.

The voltage from the electricity meter 10 is a non-isolated voltage, and thus it is preferable to isolate a circuit (communication device) of the communication hub 20 which implements a power failure detection function from the electricity meter 10. Therefore, although the output Vsys of the transformer 72 is directly connected to the ADC terminal of the ZigBee device 70, the DC 12 V supplied from the electricity meter 10 is connected to the GPI1 terminal and the GPI2 terminal of the ZigBee device 70 via photocouplers 110 and 112. In this way, the ZigBee device 70 is isolated from commercial power.

The anode of the LED of photocoupler 110 is connected to the DC 12 V line via a resistor 114, and the cathode thereof is connected to the live line. The collector of the phototransistor of photocoupler 110 is connected to the GPI1 terminal and is also grounded via a capacitor 116. The emitter of the phototransistor of photocoupler 110 is grounded via a resistor 118. The GPI1 terminal is connected to the output voltage of 3.3 V of the LDO regulator 94 via a resistor 120.

In this way, the DC 12 V on the primary side is inverted by photocoupler 110 and transmitted to the secondary side, and a change of the power supply is detected at the GPI1 terminal. In doing this, since the secondary side of the transformer 72 is connected to the electric-double-layer capacitor 82 and the output voltage Vsys of the transformer 72 will be maintained for a certain time even after the power supply (DC 12 V) is cut, the ZigBee device 70 can continue operation during that time and thus detect a change of the GPI1 terminal from low to high.

The anode of the LED of photocoupler 112 is connected to the tamper detection terminal MT_PR and also connected to the DC 12 V line via a resistor 112 (of, for example, 510 Ω) and a diode 124. The connection point of resistor 122 and diode 124 is connected to the live line via a capacitor 126 (of, for example, 22 µF). The tamper detection terminal MT_PR is connected to the live line via the pull-down resistor 58 in the electricity meter 10, and thus the anode of the LED of photocoupler 112 is also connected to the live line via the pull-down resistor 58. The cathode of the LED of photocoupler 112 is connected to the live line. That is, the pull-down resistor 58 is connected between the anode and the cathode of the LED of photocoupler 112. The collector of the phototransistor of photocoupler 112 is connected to the GPI2 terminal and also grounded via a capacitor 128. The emitter of the phototransistor of photocoupler 112 is grounded via a resistor 130. The GPI2 terminal is connected to the output voltage of 3.3 V of the LDO regulator 94 via a resistor 132.

The DC 12 V on the primary side is inverted by photocoupler 112 and transmitted to the secondary side, and a change of the power supply is detected at the GPI2 terminal. In doing this, since the secondary side of the transformer 72 is connected to the electric-double-layer capacitor 82 and the output voltage Vsys of the transformer 72 is maintained for a certain time even after the power supply (DC 12 V) is cut, the ZigBee device 70 can continue operation during that time and thus detect a change of the GPI2 terminal from high to low.

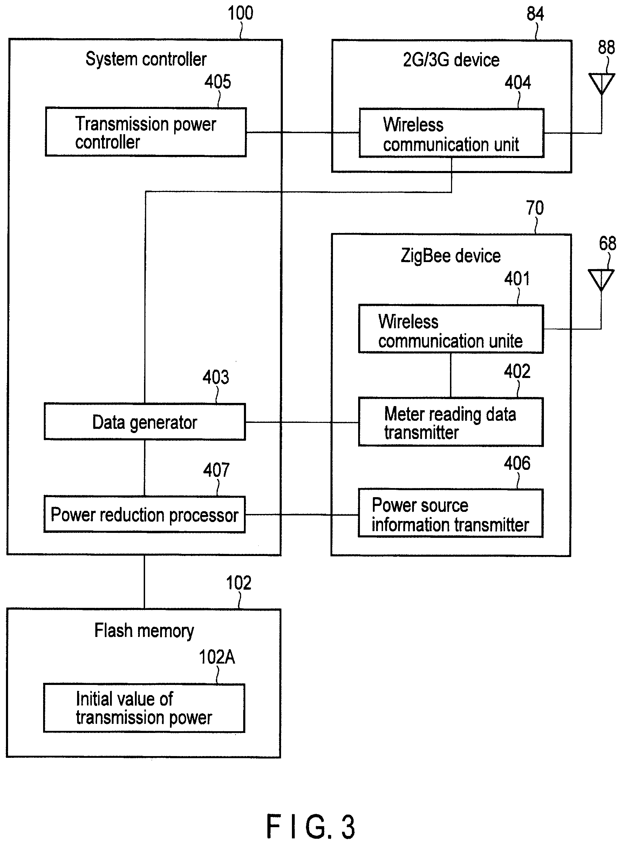

FIG. 3 illustrates an exemplary configuration of a system controller 100, a 2G/3G device 84, and a ZigBee device 70 which relate to control of transmission power required for wireless communication with a server. The system controller 100 includes a data generator 403, a transmission power controller 405 and a power reduction processor 407. The 2G/3G device 84 includes a wireless communication unit 404. The ZigBee device 70 includes a wireless communication unit 401, a meter reading data transmitter 402 and a power source information transmitter 406.

The transmission power controller 405 of the system controller 100 controls power (transmission power) for data transmission by the 2G/3G device 84 (that is, the wireless communication unit 404 and an antenna 88). When the 2G/3G device 84 starts communication, the transmission power controller 405 reads an initial value 102A of the transmission power stored in the flash memory 102, and sets the read initial value 102A of the transmission power to the power for data transmission by the 2G/3G device 84.

The data generator 403 of the system controller 100 generates transmission data including meter reading data of at least one of the electricity meter 10, the water meter 14, and the gas meter 16. The meter reading data of at least one of the electricity meter 10, the water meter 14 and the gas meter 16 is received by the wireless communication unit 401 and the antenna 68 of the ZigBee device 70. The meter reading data transmitter 402 of the ZigBee device 70 transmits the received meter reading data to the system controller 100. Using the meter reading data received from the meter reading data transmitter 402, the data generator 403 generates transmission data, and outputs the generated data to the 2G/3G device 84.

The wireless communication unit 404 of the 2G/3G device 84 performs data transmission to and data reception from a server 42, 44 or 46. The wireless communication unit 404 transmits data generated by the data generator 403 to the server 42, 44 or 46 using the transmission power set by the transmission power controller 405. The wireless communication unit 404 also receives data transmitted from the server 42, 44 or 46.

The data received from the server 42, 44 or 46 may include a request to increase transmission power. More specifically, the server 42, 44 or 46 requests the communication hub 20 to increase transmission power if the electric field intensity at the time data is transmitted by the communication hub 20 (2G/3G device 84) is low (for example, smaller than a threshold value). The server 42, 44 or 46 may also notify the communication hub 20 that the electric field intensity is low if the electric field intensity at the time data is transmitted by the communication hub 20 is low. Instead, the radio base station 36 may request the communication hub 20 to increase the transmission power or notify the communication hub 20 that the electric field intensity is low if the electric field intensity at the time data is transmitted by the communication hub 20 is low.

The transmission power controller 405 increases the power for data transmission by the 2G/3G device 84 in response to reception of such a request and notification via the wireless communication unit 404. The wireless communication unit 404 then transmits data generated by the data generator 403 to the server 42, 44 or 46 using the increased transmission power. The transmission power set by the transmission power controller 405 (for example, 2 W) is an average power required at the time of data transmission. Therefore, much larger power (for example, 4 W) may be required as an instantaneous value.

The communication hub 20 is connected to the electricity meter 10, which is connected to a commercial power source 52, and operates with constant power (for example, 6 W) supplied from the electricity meter 10. Therefore, if the transmission power controller 405 has increased the transmission power, the instantaneous value (peak value) of the power consumed by the communication hub 20 may exceed the constant power. As an auxiliary power for such a case, an electric-double-layer capacitor 82 is provided in the communication hub 20. If power (for example, 5 W) consumed by the communication hub 20 is smaller than the constant power (for example, 6 W) supplied from the external electricity meter 10, the communication hub 20 charges the electric-double-layer capacitor 82 using a part of the constant power. If an instantaneous value of power (for example, 8 W) consumed by the communication hub 20 is larger than the constant power (for example, 6 W) supplied from the electricity meter 10, the communication hub 20 is driven by using the constant power and power (for example, 2 W) discharged from the electric-double-layer capacitor 82. However, if the power consumed by the communication hub 20 remains high, for example, if the average power consumed by the communication hub 20 continuously exceeds 6 W which can be supplied from the electricity meter 10, the power (electric charge) discharged from the electric-double-layer capacitor 82 may be exhausted, and thus sudden system down of the communication hub 20 or unintended interruption of wireless communication may occur.

Therefore, if the residual amount of power accumulated in the electric-double-layer capacitor 82 keeps on reducing even though power is supplied from the outside (the electricity meter 10) to the communication hub 20, it is determined that the communication hub 20 consumes power more than the power supplied from the outside (namely, excessively consuming power), and thus a process of handling excessively consuming power will be executed in the embodiment. This process of handling excessively consuming power includes, for example, a process of reducing power consumption caused by wireless communication performed by the communication hub 20, a process of notifying the server 42, 44, 46 that the communication hub 20 is in a state of excessively consuming power, and a process of storing information indicating that the communication hub 20 is in a state of excessively consuming power in the flash memory 102, etc. This process can handle occurring sudden system down or unintended interruption of wireless communication in the communication hub 20 when transmission power becomes large because of weak electric field intensity.

Specifically, the power reduction processor 407 detects that the communication hub 20 is in a state of excessively consuming power by using information transmitted from the power source information transmitter 406 of the ZigBee device 70. The transmitted information indicates the presence or absence of the power supplied from the outside (namely, electricity meter 10) and the voltage of the electric-double-layer capacitor 82 (output voltage Vsys of the transformer 72). The ZigBee device 70 is capable of detecting the voltage of the electric-double-layer capacitor 82 using the output voltage Vsys of the transformer 72 connected to an ADC terminal, and detecting the presence or absence of the power (DC 12 V) supplied from the electricity meter 10 by the change of a GPI1 terminal from low to high or the change of a GPI2 terminal from high to low. Based on the detection, the power source information transmitter 406 transmits to the system controller 100 (power reduction processor 407) the information which indicates the presence or absence of the electronic power supplied from the outside and the voltage of the electric-double-layer capacitor 82.

The power reduction processor 407 detects that the voltage of the electric-double-layer capacitor 82 is larger than or equal to the threshold (for example, 80% of the voltage of the fully charged electric-double-layer capacitor 82) after a power supply is started from the outside by using the information transmitted from the power source information transmitter 406. The power reduction processor 407 determines that the communication hub 20 is in a state of excessively consuming power when the voltage of the electric-double-layer capacitor 82 is smaller than the threshold even though power has been supplied from the outside after the voltage of the electric-double-layer capacitor 82 has become larger than or equal to the threshold. In this way, whether the communication hub 20 is in a state of excessively consuming power or not is determined using the voltage detected at the GPI1 terminal, the GPI2 terminal, and the ADC terminal, all in the ZigBee device 70. Therefore, it is not necessary to provide the communication hub 20 with a special voltage and current monitoring circuit in order to detect whether or not the communication hub 20 is in a state of excessively consuming power. When it is determined that the communication hub 20 is in a state of excessively consuming power, the power reduction processor 407 executes the process of handling excessive consumption of power. This process is, for example, a process of reducing power consumed for wireless communication by the communication hub 20.

The process of reducing power consumed while executing wireless communication includes, for example, a process of interrupting a cellular communication executed by the 2G/3G device 84 (for example, a 2G/3G/LTE communication), a process of changing a cellular communication executed by the 2G/3G device 84 to a multi-hop communication executed by an RF mesh device 86, a process of reducing a data rate, etc.

The process of interrupting a cellular communication which the 2G/3G device 84 executes will eliminate consumption of power required for transmitting and receiving data through the radio base station 36. Consequently, the power spent on wireless communication will be reduced. The process of changing a cellular communication executed by the 2G/3G device 84 to a multi-hop communication executed by the RF mesh device 86 will reduce power spent on wireless communication. This is because the operating voltage of the 2G/3G device 84 is 3.4-4.2 V (typically 3.8 V) whereas the operating voltage of RF mesh device 86 is 3.3 V (typically).

Moreover, the process of reducing a data rate is, for example, a process which reduces the ratio of the transmission time per unit time. The wireless communication unit 404 determines transmission time and reception time based on the reduced ratio, transmits data to any of the servers 42, 44, and 46 within the determined transmission time, and receives data from any of the servers 42, 44, and 46 within the determined reception time. It should be noted that the transmission time or reception time per unit time may be determined by the system controller 100. Moreover, the wireless communication unit 404 (or system controller 100) may determine the arrangement of transmission slots (Tx) and reception slots (Rx) for time slots included in a communication frame (for example, a TDMA frame) used for transmission and reception. The wireless communication unit 404 transmits data to the server 42, 44 or 46 at the timing corresponding to the transmission slots, and receives data from the server 42, 44 or 46 at the timing corresponding to the reception slots. Generally, power consumed within the period of a reception slot including the power for data reception is less than power consumed within the period of a transmission slot including the power for data transmission. Therefore, reducing the ratio of the transmission time per unit time, i.e., reducing the ratio of the transmission slots in the communication frame 501 shortens a time period during which increased transmission power is consumed. Accordingly, the mean power which consumed by wireless communication will be reduced.

Execution of such a process surely prevents sudden system down or unintended interruption of wireless communication from occurring to the communication hub 20.

The power reduction processor 407 may execute a process of storing information indicating that the communication hub 20 is in a state of excessively consuming power or that the communication hub 20 executes a process of reducing power consumption in the flash memory 20, etc. This makes it possible to confirm that the communication hub 20 is in a state of excessively consuming power or that the communication hub 20 executes a process of reducing power consumption when the smart meter is maintained, and take measures to prevent the communication hub 20 from becoming in a state of excessively consuming power.

Furthermore, the wireless communication unit 404 may notify the power company's server 42, the gas company's server 44, the water company's server 46, or a communication contractor's server (not shown) that the communication hub 20 is in a state of excessively consuming power or the communication hub 20 is in the process of reducing power consumption. This makes it possible to promptly take measures to prevent the communication hub 20 from becoming in a state of excessively consuming power.

The power reduction processor 407 keeps the communication hub 20 consuming reduced power for wireless communication until the voltage of the electric-double-layer capacitor 82 is larger than or equal to a threshold. More specifically, after a predetermined period of time (for example, 10 minutes) has passed since the execution of the process for reducing power consumed for wireless communication, the power reduction processor 407 determines whether the voltage of the electric-double-layer capacitor 82 is not less than the threshold using the information newly transmitted by the power source information transmitter 406. That is, it is determined whether the residual amount of the electric-double-layer capacitor 82 is fully increased by the charge using the power supplied from the outside during the predetermined period of time.

The power reduction processor 407 cancels the process for reducing the power consumed by the wireless communication by the communication hub 20, when the voltage of the electric-double-layer capacitor 82 is larger than or equal to the threshold. The power reduction processor 407 executes a process of resuming cellular communication by the 2G/3G device 84, if the process of interrupting the cellular communication by the 2G/3G device 84 was executed. If the process of changing a cellular communication executed by the 2G/3G device 84 to a multi-hop communication executed by the RF mesh device 86 was executed, the power reduction processor 407 executes a process of changing the multi-hop communication executed by the RF mesh device 86 to the cellular communication executed by the 2G/3G device 84. Moreover, if the process of reducing a data rate was executed, the power reduction processor 407 executes a process of increasing the data rate (for example, a process of increasing the ratio of the transmission time per unit time).

This makes it possible to cause the 2G/3G device 84 to execute normal wireless communication by canceling the process for reducing power consumed for wireless communication if the electric-double-layer capacitor 82 has been fully charged again.

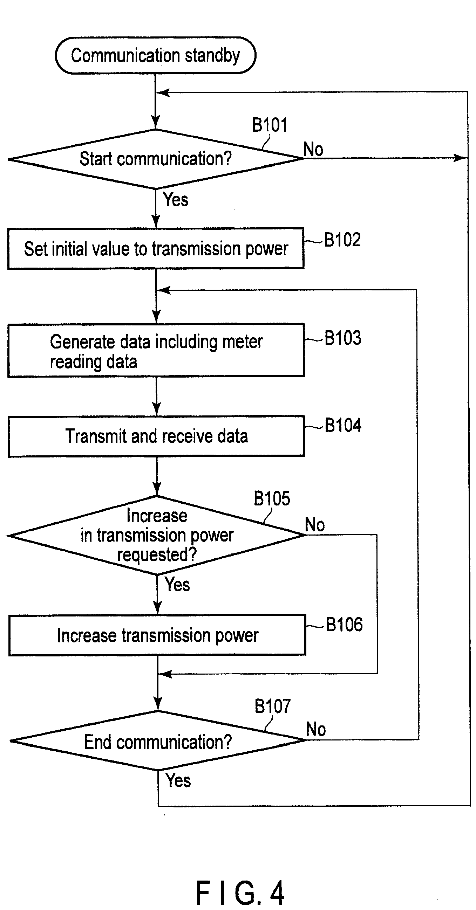

Now, an example of the procedure of a communication process executed by the communication hub 20 will be explained below with reference to the flowchart illustrated in FIG. 4. Here, it is assumed that the communication hub 20 is in a standby state, in which the communication hub 20 waits for starting communication.

First of all, the transmission power controller 405 of the system controller 100 determines whether it is timing of starting communication with a server 42, 44 or 46 (block B101). The transmission power controller 405 determines whether it is the timing of transmitting the consumed quantity of power, gas or water to the server 42, 44 or 46 of the power company, gas company or water company, for example. When communication with the server 42, 44 or 46 is not started (No in block B101), the communication hub 20 is still in a standby state.

On the other hand, when communication with the server 42, 44 or 46 is started (Yes in block B101), the transmission power controller 405 sets an initial value to the transmission power for data transmission by the wireless communication unit 404 of the 2G/3G device 84 (block B102). For example, the transmission power controller 405 reads the initial value 102A of the transmission power stored in the flash memory 102 and sets the read initial value 102A to the transmission power.

The data generator 403 generates data for transmission including meter reading data (block B103). The wireless communication unit 404 then transmits and receives data to and from the server 42, 44 or 46 (block B104). The wireless communication unit 404 transmits the generated data to the server 42, 44 or 46 using the transmission power set by the transmission power controller 405.

Subsequently, the transmission power controller 405 determines whether increase in transmission power is required by the server 42, 44 or 46 (block B105). The server 42, 44 or 46 requires the communication hub 20 to increase transmission power, when the signal intensity of data transmission executed by the communication hub 20 (2G/3G device 84) is weak (for example, when the signal intensity is smaller than a threshold). When the transmission power controller 405 receives the request through the wireless communication unit 404 of the 2G/3G device 84, the transmission power controller 405 determines that increase in transmission power is requested by the server 42, 44 or 46.

When increase in transmission power is requested by the server 42, 44 or 46 (Yes in block B105), the transmission power controller 405 increases power for data transmission by the 2G/3G device 84 (block B106). It should be noted that the server 42, 44 or 46 may notify the communication hub 20 that transmission signal intensity is weak, when the signal intensity of data transmission executed by the communication hub 20 is weak. The transmission power controller 405 may increase in response to the notification the power for the data transmission by the 2G/3G device 84.

The data generator 403 then determines whether to end the communication with the server 42, 44 or 46 (block B107). When the communication is ended (Yes in block B107), the communication hub 20 is switched to the standby state waiting a start of communication. When the communication is continued (No in block B107), the process returns to block B103 and data transmission to and data reception from the server 42, 44 or 46 is be continued.

Moreover, when increase in transmission power is not requested by the server 42, 44 or 46 (No in block B105), the data generator 403 determines whether the communication with the server 42, 44 or 46 should be ended or not (block B107). When the communication should be ended (Yes in block B107), the communication hub 20 is brought in a standby state and waits for starting communication. When the communication should be continued (No in block B107), the process should return to the block B103 and the transmission and reception of data to and from the server 42, 44 or 46 will be continued.

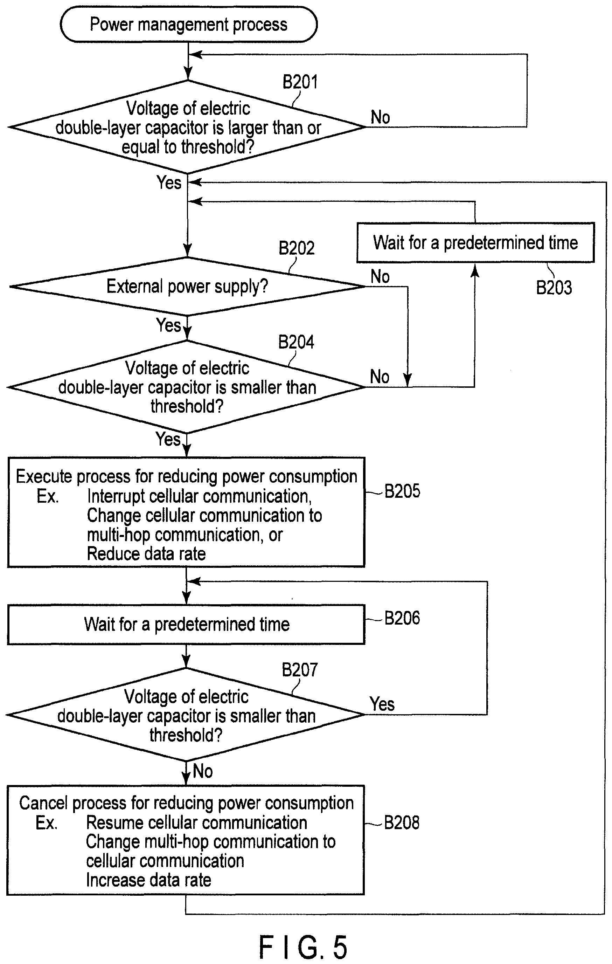

Now, an example of the procedure of a power control process executed by the communication hub 20 will be explained below with reference to the flowchart illustrated in FIG. 5. The power control process is a process for controlling the communication process according to the power state of the communication hub 20, and is started, for example, in response to the communication hub 20 is attached to the electricity meter 10. The process illustrated in FIG. 4 and the power control process illustrated in FIG. 5 are executed in parallel.

First of all, the power reduction processor 407 of the system controller 100 determines whether the voltage of the electric-double-layer capacitor 82 is larger than or equal to a threshold (block B201). Since power is not supplied to the communication hub 20 in the initial state in which the communication hub 20 stands alone and is not yet attached to the electricity meter 10, the electric-double-layer capacitor 82 keeps on discharging electricity. Since the electric-double-layer capacitor 82 operates as an assistant power source as mentioned above, it is the requirement for the normal operation of the communication hub 20 that the electric-double-layer capacitor 82 is fully charged. Therefore, when the communication hub 20 is attached to the electricity meter 10, it will be determined whether the voltage of the electric-double-layer capacitor 82 is larger than or equal to a threshold. The power reduction processor 407 determines whether the voltage of the electric-double-layer capacitor 82 is larger than or equal to a threshold using, for example, the information on the voltage of the electric-double-layer capacitor 82 transmitted by the power source information transmitter 406 of the ZigBee device 70. When the voltage of the electric-double-layer capacitor 82 is smaller than the threshold (No in the block B201), the procedure returns to block B201 and it is determined again whether the voltage of the electric-double-layer capacitor 82 is larger than or equal to the threshold. That is, the power reduction processor 407 repeats the procedure of block B201 until the voltage of the electric-double-layer capacitor 82 reaches the threshold or more.

When the voltage of the electric-double-layer capacitor 82 is larger than or equal to the threshold (Yes in the block B201), the power reduction processor 407 determines whether there is any power supplied from the outside (block B202). The power supplied from the outside is, for example, power supplied from the external power source 52 connected via the electricity meter 10 to which the communication hub 20 is attached. When there is no power supplied from the outside (No in the block B202), the power reduction processor 407 waits for a predetermined time period (block B203), and then returns to block B202 for determining again whether there is any power supplied from the outside.

When the voltage of the electric-double-layer capacitor 82 reaches or exceeds the threshold, it becomes possible for the communication hub 20 to operate normally. Therefore, the communication hub 20 is switched to a communication standby state illustrated in FIG. 4.

On the other hand, when power is supplied from the outside (Yes in block B202), the power reduction processor 407 determines whether the voltage of the electric-double-layer capacitor 82 is smaller than the threshold (block B204). When the voltage of the electric-double-layer capacitor 82 is larger than or equal to the threshold (No in block B204), the power reduction processor 407 waits for a predetermined time (block B203), and then returns to block B202 for determining again whether there is power supplied from the outside.

When the voltage of the electric-double-layer capacitor 82 is smaller than the threshold (Yes in block B204), the power reduction processor 407 executes the process for reducing power consumed by the communication hub 20 (block B205). The process for reducing power consumed by the communication hub 20 includes, for example, a process of interrupting cellular communication (for example, 2G/3G/LTE communication) by the 2G/3G device 84, a process of changing the cellular communication executed by the 2G/3G device 84 to the multi-hop communication executed by the RF mesh device 86, a process of reducing a data rate, etc.

The process of reducing a data rate includes reducing the ratio of the transmission slots of two or more time slots included in a communication frame. The communication frame consists of eight time slots, for example, and is normally constituted by four transmission slots (Tx), and two reception slots (Rx) and two switching slots (Idle). When reducing a data rate, the number of the transmission slots of the eight time slots is reduced. For example, only one of the eight time slots is set as a transmission slot.

The power reduction processor 407 may execute a process of storing information indicating that the communication hub 20 is in a state of excessively consuming power or that the communication hub 20 executes a process of reducing power consumption in the flash memory 20, etc. when the voltage of the electric-double-layer capacitor 82 is smaller than the threshold. The wireless communication unit 404 may notify the power company's server 42, the gas company's server 44, the water company's server 46, or a communication contractor's server that the communication hub 20 is in a state of excessively consuming power or the communication hub 20 executes the process of reducing power consumption.

Subsequently, the power reduction processor 407 waits for a predetermined time (block B206), and then determines whether the voltage of the electric-double-layer capacitor 82 is smaller than a threshold (block B207). When the voltage of the electric-double-layer capacitor 82 is smaller than the threshold (Yes in block B207), the power reduction processor 407 waits for a predetermined time again by returning to block B206, and then determines whether the voltage of the electric-double-layer capacitor 82 is smaller than the threshold.

When the voltage of the electric-double-layer capacitor 82 is larger than or equal to the threshold (No in block B207), the power reduction processor 407 cancels the process executed at block B205 for reducing power consumption (block B208). More specifically, when the process of interrupting the 2G/3G device 84 in cellular communication has been executed at the block B205, the power reduction processor 407 executes a process of causing the 2G/3G device 84 to resume the interrupted cellular communication. When the process of changing the cellular communication executed by the 2G/3G device 84 to the multi-hop communication executed by the RF mesh device 86 has been executed at the block B205, the power reduction processor 407 executes a process of changing the multi-hop communication executed by the RF mesh device 86 to the cellular communication executed by the 2G/3G device 84. Moreover, when the process of reducing a data rate has been executed at the block B205, the power reduction processor 407 executes a process of increasing the data rate (data rate restoration).

As has been explained above, the embodiment makes it possible to handle occurring sudden system down or unintended interruption of wireless communication in an electronic apparatus when transmission power becomes large because of low electric field intensity. The wireless communication unit 404 of the 2G/3G device 84 wirelessly communicates with the server 42, 44 or 46 through the antenna 88. The electric-double-layer capacitor 82 is charged using the power supplied externally. The power reduction processor 407 executes a process of handling excessively consuming power when the voltage of the electric-double-layer capacitor 82 becomes smaller than a threshold while power is supplied from the outside after the voltage has become larger than or equal to the threshold.

Accordingly, since a process of reducing power consumed for wireless communication will be executed as the process of handling excessively consuming power when transmission power becomes large because of low electric field intensity and the communication hub 20 is thus brought into a state of excessively consuming power, sudden system down or unintended interruption of wireless communication will be prevented from occurring to the communication hub 20.

A smart meter, in which the communication hub 20 is attached to the electricity meter 10, the water meter 14, or the gas meter 16, has been explained above as an example of an electronic apparatus having a communication function. However, electronic apparatuses having a communication function are not restricted to these apparatuses. The embodiment is also applied to any apparatuses other than the meters if they need to be connected to any external apparatuses by radio.

It should be noted that the operational procedures of the present embodiment can be reduced to a computer program, which makes it possible to easily accomplish the same effects as the embodiment only to install the computer program in a computer through a computer readable storage medium storing the computer program and to cause the computer to execute the installed computer program.

Moreover, the present invention is not restricted to the above-mentioned embodiments as they are, and any component may be modified without departing from the scope of the invention when the present invention is put into practice. Moreover, various modifications of the invention can be made with combination of any suitable components currently disclosed in the above-mentioned embodiments. For example, it is possible to delete some components from all the components illustrated in each of the embodiments. Furthermore, it is possible to combine various components suitably selected from the disclosed different embodiments.

## Claims

1. An electronic apparatus comprising:
a first communication unit (84) configured to perform wireless communication with an external apparatus (42);
a capacitor (82) charged with a part of constant power supplied externally, wherein said electronic apparatus is driven using said constant power and power discharged from the capacitor (82) when instantaneous power consumed by the electronic apparatus exceeds said constant power; and **characterized by** further comprising a processor (100) configured to execute a process of handling excessively consuming power of the electronic apparatus when voltage of the capacitor (82) becomes smaller than a threshold while the constant power is supplied after the voltage has become larger than or equal to the threshold.

2. The electronic apparatus of Claim 1,
**characterized in that**
the electronic apparatus is connected to a second external apparatus (10) connected to a commercial power source (52), and is supplied with the constant power from the second external apparatus (10).

3. The electronic apparatus of Claim 1,
**characterized in that** the process of handling excessively consuming power comprises a process of reducing power consumed for the wireless communication.

4. The electronic apparatus of Claim 3,
**characterized in that** the process of reducing power consumed for the wireless communication comprises a process of interrupting the wireless communication.

5. The electronic apparatus of Claim 3,
**characterized in that** the process of reducing power consumed for the wireless communication comprises a process of reducing a ratio of transmission time per unit time in the wireless communication.

6. The electronic apparatus of Claim 5,
**characterized in that** the first communication unit (84) is configured to transmit data to the external apparatus (42) within transmission time based on the ratio.

7. The electronic apparatus of Claim 3,
**characterized in that**
the first communication unit (84) is configured to perform wireless communication with a first communication method,
the electronic apparatus further comprises a second communication unit (86) which is configured to perform wireless communication with the external apparatus (42) via one or more other electronic apparatuses with a second communication method, power consumed by the second communication unit (86) is smaller than power consumed by the first communication unit (84), and
the process of reducing power consumed for the wireless communication comprises a process of changing the wireless communication with the external apparatus (42) from the first communication unit (84) to the second communication unit (86).

8. The electronic apparatus of Claim 3,
**characterized in that**, if the voltage becomes larger than or equal to the threshold after the process of reducing power consumed for the wireless communication has been executed, the processor (100) is configured to execute a process of canceling the process having been executed by the processor and restoring the power consumed for wireless communication to the power before proceeding to reduction.

9. The electronic apparatus of Claim 1,
**characterized in that** the process of handling excessively consuming power comprises a process of notifying the external apparatus (42) that the voltage of the capacitor (82) becomes smaller than the threshold while the constant power is supplied after the voltage has become larger than or equal to the threshold.

10. The electronic apparatus of Claim 1,
**characterized in that** the process of handling excessively consuming power comprises a process of storing, in a storage medium (102), information indicating that the voltage of the capacitor (82) becomes smaller than the threshold while the constant power is supplied after the voltage has become larger than or equal to the threshold.

11. A method of managing power consumed by an electronic apparatus (20) comprising the steps of:
performing wireless communication with an external apparatus (42);
charging a capacitor (82) with a part of constant power supplied externally,
driving the electronic apparatus (20) using the constant power and power discharged from the capacitor (82) when instantaneous power consumed by the electronic apparatus (20) exceeds the constant power; **characterized by** further comprising the step of:
executing a process of handling excessively consuming power of the electronic apparatus when voltage of the capacitor (82) becomes smaller than a threshold while the constant power is supplied after the voltage has become larger than or equal to the threshold.

12. The method of Claim 11, **characterized in that** the electronic apparatus (20) is connected to a second external apparatus (10) connected to a commercial power source (52), and is supplied with the constant power from the second external apparatus (10).

13. The method of Claim 11, **characterized in that** the process of handling excessively consuming power comprises a process of reducing power consumed for the wireless communication.

14. The method of Claim 13, **characterized by** further comprising executing, if the voltage becomes larger than or equal to the threshold after the process of reducing power consumed for the wireless communication has been executed, a process of canceling the process having been executed and restoring the power consumed for wireless communication to the power before proceeding to reduction.

15. The method of Claim 11, **characterized in that** the process of handling excessively consuming power comprises a process of notifying the external apparatus (42) that the voltage of the capacitor (82) becomes smaller than the threshold while the constant power is supplied after the voltage has become larger than or equal to the threshold.

## Patentansprüche

1. Elektronische Vorrichtung, aufweisend:
eine erste Kommunikationseinheit (84), die konfiguriert ist, um mit einer externen Vorrichtung (42) eine drahtlose Kommunikation durchzuführen;
einen Kondensator (82), der mit einem Teil einer extern zugeführten konstanten Energie geladen ist, wobei die elektronische Vorrichtung unter Verwendung der konstanten Energie und einer von dem Kondensator (82) entladenen Energie angetrieben wird, wenn eine durch die elektronische Vorrichtung verbrauchte momentane Energie die konstante Energie überschreitet; und
ferner **gekennzeichnet durch**
einen Prozessor (100), der konfiguriert ist, um einen Prozess zur Handhabung einer exzessiven Verbrauchsenergie der elektronischen Vorrichtung auszuführen, wenn eine Spannung des Kondensators (82) kleiner als ein Schwellenwert wird, während die konstante Energie zugeführt wird, nachdem die Spannung größer als oder gleich zu dem Schwellenwert geworden ist.

2. Elektronische Vorrichtung nach Anspruch 1, **dadurch gekennzeichnet, dass**
die elektronische Vorrichtung mit einer zweiten externen Vorrichtung (10) verbunden ist, die mit einer kommerziellen Energiequelle (52) verbunden ist, und mit der konstanten Energie von der zweiten externen Vorrichtung (10) versorgt wird.

3. Elektronische Vorrichtung nach Anspruch 1, **dadurch gekennzeichnet, dass** der Prozess zur Handhabung einer exzessiven Verbrauchsenergie einen Prozess zum Verringern einer für die drahtlose Kommunikation verbrauchten Energie aufweist.

4. Elektronische Vorrichtung nach Anspruch 3, **dadurch gekennzeichnet, dass** der Prozess zum Verringern einer für die drahtlose Kommunikation verbrauchten Energie einen Prozess zum Unterbrechen der drahtlosen Kommunikation aufweist.

5. Elektronische Vorrichtung nach Anspruch 3, **dadurch gekennzeichnet, dass** der Prozess zum Verringern einer für die drahtlose Kommunikation verbrauchten Energie einen Prozess zum Verringern eines Verhältnisses einer Übertragungszeit pro Einheitszeit in der drahtlosen Kommunikation aufweist.

6. Elektronische Vorrichtung nach Anspruch 5, **dadurch gekennzeichnet, dass** die erste Kommunikationseinheit (84) konfiguriert ist, um Daten zu der externen Vorrichtung (42) innerhalb einer Übertragungszeit basierend auf dem Verhältnis zu übertragen.

7. Elektronische Vorrichtung nach Anspruch 3, **dadurch gekennzeichnet, dass**
die erste Kommunikationseinheit (84) konfiguriert ist, um eine drahtlose Kommunikation mit einem ersten Kommunikationsverfahren durchzuführen,
die elektronische Vorrichtung ferner eine zweite Kommunikationseinheit (86) aufweist, welche konfiguriert ist, um eine drahtlose Kommunikation mit der externen Vorrichtung (42) über eine oder mehrere andere elektronische Vorrichtungen mit einem zweiten Kommunikationsverfahren durchzuführen, wobei eine durch die zweite Kommunikationseinheit (86) verbrauchte Energie kleiner als eine durch die erste Kommunikationseinheit (84) verbrauchte Energie ist, und
der Prozess zum Verringern einer für die drahtlose Kommunikation verbrauchten Energie einen Prozess zum Ändern der drahtlosen Kommunikation mit der externen Vorrichtung (42) von der ersten Kommunikationseinheit (84) zu der zweiten Kommunikationseinheit (86) aufweist.

8. Elektronische Vorrichtung nach Anspruch 3, **dadurch gekennzeichnet, dass**
falls die Spannung größer als oder gleich zu dem Schwellenwert wird, nachdem der Prozess zum Verringern einer für die drahtlose Kommunikation verbrauchten Energie ausgeführt worden ist, der Prozessor (100) konfiguriert ist, um einen Prozess zum Löschen des Prozesses, der durch den Prozessor ausgeführt worden ist, und zum Wiederherstellen der für eine drahtlose Kommunikation verbrauchten Energie zu der Energie vor einem Fortfahren zu einer Verringerung, auszuführen.

9. Elektronische Vorrichtung nach Anspruch 1, **dadurch gekennzeichnet, dass** der Prozess zur Handhabung einer exzessiven Verbrauchsenergie einen Prozess zum Benachrichtigen der externen Vorrichtung (42) aufweist, dass die Spannung des Kondensators (82) kleiner als der Schwellenwert wird, während die konstante Energie zugeführt wird, nachdem die Spannung größer als oder gleich zu dem Schwellenwert geworden ist.

10. Elektronische Vorrichtung nach Anspruch 1, **dadurch gekennzeichnet, dass** der Prozess zur Handhabung einer exzessiven Verbrauchsenergie einen Prozess zum Speichern in einem Speichermedium (102) von Informationen aufweist, die anzeigen, dass die Spannung des Kondensators (82) kleiner als der Schwellenwert wird, während die konstante Energie zugeführt wird, nachdem die Spannung größer als oder gleich zu dem Schwellenwert geworden ist.

11. Verfahren zum Verwalten einer durch eine elektronische Vorrichtung (20) verbrauchten Energie mit den folgenden Schritten:
Durchführen einer drahtlosen Kommunikation mit einer externen Vorrichtung (42);
Laden eines Kondensators (82) mit einem Teil einer extern zugeführten konstanten Energie;
Antreiben der elektronischen Vorrichtung (20) unter Verwendung der konstanten Energie und einer von dem Kondensator (82) entladenen Energie, wenn eine durch die elektronische Vorrichtung (20) verbrauchte momentane Energie die konstante Energie überschreitet;
ferner **gekennzeichnet durch** den folgenden Schritt:
Ausführen eines Prozesses zur Handhabung einer exzessiven Verbrauchsenergie der elektronischen Vorrichtung, wenn eine Spannung des Kondensators (82) kleiner als ein Schwellenwert wird, während die konstante Energie zugeführt wird, nachdem die Spannung größer als oder gleich zu dem Schwellenwert geworden ist.

12. Verfahren nach Anspruch 11, **dadurch gekennzeichnet, dass**
die elektronische Vorrichtung (20) mit einer zweiten externen Vorrichtung (10) verbunden ist, die mit einer kommerziellen Energiequelle (52) verbunden ist, und mit der konstanten Energie von der zweiten externen Vorrichtung (10) versorgt wird.

13. Verfahren nach Anspruch 11, **dadurch gekennzeichnet, dass** der Prozess zur Handhabung einer exzessiven Verbrauchsenergie einen Prozess zum Verringern einer für die drahtlose Kommunikation verbrauchten Energie aufweist.

14. Verfahren nach Anspruch 13, ferner **gekennzeichnet durch** ein Ausführen, falls die Spannung größer als oder gleich zu dem Schwellenwert wird, nachdem der Prozess zum Verringern einer für die drahtlose Kommunikation verbrauchten Energie ausgeführt worden ist, eines Prozesses zum Löschen des Prozesses, der ausgeführt worden ist, und zum Wiederherstellen der für eine drahtlose Kommunikation verbrauchten Energie zu der Energie vor einem Fortfahren zu einer Verringerung.

15. Verfahren nach Anspruch 11, **dadurch gekennzeichnet, dass** der Prozess zur Handhabung einer exzessiven Verbrauchsenergie einen Prozess zum Benachrichtigen der externen Vorrichtung (42) aufweist, dass die Spannung des Kondensators (82) kleiner als der Schwellenwert wird, während die konstante Energie zugeführt wird, nachdem die Spannung größer als oder gleich zu dem Schwellenwert geworden ist.

## Revendications

1. Appareil électronique comprenant :
une première unité de communication (84) conçue pour réaliser une communication sans fil avec un appareil externe (42) ;
un condensateur (82) chargé avec une partie de la puissance constante fournie depuis l'extérieur,
dans lequel ledit appareil électronique est commandé à l'aide de ladite puissance constante et d'une puissance débitée par le condensateur (82) lorsqu'une puissance instantanée consommée par l'appareil électronique dépasse ladite puissance constante ; et
**caractérisé en ce qu'**il comprend en outre un processeur (100) conçu pour exécuter un processus de traitement d'une puissance consommée excessive de l'appareil électronique lorsque la tension du condensateur (82) devient inférieure à un seuil, tandis que la puissance constante est fournie après que la tension est devenue supérieure ou égale au seuil.

2. Appareil électronique selon la revendication 1, **caractérisé en ce que** l'appareil électronique est connecté à un second appareil externe (10) connecté à une source d'énergie commerciale (52), et est alimenté en puissance constante à partir du second appareil externe (10).

3. Appareil électronique selon la revendication 1, **caractérisé en ce que** le processus de traitement d'une puissance consommée excessive comprend un processus de réduction de la puissance consommée pour la communication sans fil.

4. Appareil électronique selon la revendication 3,
**caractérisé en ce que** le processus de réduction de la puissance consommée pour la communication sans fil comprend un processus d'interruption de la communication sans fil.

5. Appareil électronique selon la revendication 3,
**caractérisé en ce que** le processus de réduction de la puissance consommée pour la communication sans fil comprend un processus de réduction d'un rapport de temps de transmission par unité de temps dans la communication sans fil.

6. Appareil électronique selon la revendication 5,
**caractérisé en ce que** la première unité de communication (84) est conçue pour transmettre des données à l'appareil externe (42) à l'intérieur du temps de transmission sur la base du rapport.

7. Appareil électronique selon la revendication 3,
**caractérisé en ce que** :
la première unité de communication (84) est conçue pour réaliser une communication sans fil à l'aide d'un premier procédé de communication,
l'appareil électronique comprend en outre une seconde unité de communication (86) qui est conçue pour réaliser une communication sans fil avec l'appareil externe (42) par l'intermédiaire d'un ou de plusieurs autre(s) appareil(s) électronique(s) à l'aide d'un second procédé de communication, la puissance consommée par la seconde unité de communication (86) étant inférieure à la puissance consommée par la première unité de communication (84), et
le processus de réduction de la puissance consommée pour la communication sans fil comprend un processus pour faire passer la communication sans fil avec l'appareil externe (42) de la première unité de communication (84) à la seconde unité de communication (86).

8. Appareil électronique selon la revendication 3,
**caractérisé en ce que** si la tension devient supérieure ou égale au seuil après que le processus de réduction de la puissance consommée pour la communication sans fil a été exécuté, le processeur (100) est conçu pour exécuter un processus d'annulation du processus ayant été exécuté par le processeur et de rétablissement de la puissance consommée pour la communication sans fil à la puissance avant qu'il n'ait été procédé à la réduction.

9. Appareil électronique selon la revendication 1,
**caractérisé en ce que** le processus de traitement d'une puissance consommée excessive comprend un processus de notification à l'appareil externe (42) que la tension du condensateur (82) devient inférieure au seuil, tandis que la puissance constante est fournie après que la tension est devenue supérieure ou égale au seuil.

10. Appareil électronique selon la revendication 1,
**caractérisé en ce que** le processus de traitement d'une puissance consommée excessive comprend un processus de stockage, sur un support de stockage (102), des informations indiquant que la tension du condensateur (82) devient inférieure au seuil, tandis que la puissance constante est fournie après que la tension est devenue supérieure ou égale au seuil.

11. Procédé de gestion de la puissance consommée par un appareil électronique (20) comprenant les étapes suivantes :
réaliser la communication sans fil avec un appareil externe (42) ;
charger un condensateur (82) avec une partie de la puissance constante fournie depuis l'extérieur,
commander l'appareil électronique (20) à l'aide de la puissance constante et d'une puissance débitée par le condensateur (82) lorsqu'une puissance instantanée consommée par l'appareil électronique (20) dépasse la puissance constante ;
**caractérisé en ce qu'**il comprend en outre l'étape suivante :
exécuter un processus de traitement d'une puissance consommée excessive de l'appareil électronique lorsque la tension du condensateur (82) devient inférieure à un seuil, tandis que la puissance constante est fournie après que la tension est devenue supérieure ou égale au seuil.

12. Procédé selon la revendication 11, **caractérisé en ce que** l'appareil électronique (20) est connecté à un second appareil externe (10) connecté à une source d'énergie commerciale (52), et est alimenté en puissance constante à partir du second appareil externe (10).

13. Appareil selon la revendication 11, **caractérisé en ce que** le processus de traitement d'une puissance consommée excessive comprend un processus de réduction de la puissance consommée pour la communication sans fil.

14. Procédé selon la revendication 13, **caractérisé en ce qu'**il comprend en outre l'exécution, si la tension devient supérieure ou égale au seuil après que le processus de réduction de la puissance consommée pour la communication sans fil a été exécuté, d'un processus d'annulation du processus ayant été exécuté et de rétablissement de la puissance consommée pour la communication sans fil à la puissance avant qu'il n'ait été procédé à la réduction.

15. Procédé selon la revendication 11, **caractérisé en ce que** le processus de traitement d'une puissance consommée excessive comprend un processus de notification à l'appareil externe (42) que la tension du condensateur (82) devient inférieure au seuil, tandis que la puissance constante est fournie après que la tension est devenue supérieure ou égale au seuil.
